# EUROPÄISCHE PATENTSCHRIFT

(11) **EP 1 678 387 B1**
(45) Veröffentlichungstag und Bekanntmachung des Hinweises auf die Patenterteilung: **19.09.2012**
(21) Anmeldenummer: 04790111.1
(22) Anmeldetag: 04.10.2004
(51) Int. Cl.: E04B 1/76

(54) **WÄRMEDÄMM-VERBUNDSYSTEME SOWIE DÄMMELEMENT, INSBESONDERE DÄMMELEMENT HIERFÜR**
HEAT INSULATING COMPOSITE SYSTEMS, AND INSULATING ELEMENT, ESPECIALLY INSULATING ELEMENTS FOR SAID SYSTEMS
SYSTEMES COMPOSITES D'ISOLATION THERMIQUE AINSI QU'ELEMENT D'ISOLATION, EN PARTICULIER ELEMENTS D'ISOLATION POUR LESDITS SYSTEMES

(30) Priorität: 06.10.2003 EP 03022611; 07.01.2004 FR 0400084
(43) Veröffentlichungstag der Anmeldung: 12.07.2006
(73) Patentinhaber: SAINT-GOBAIN ISOVER G+H AG, 67059 Ludwigshafen (DE)
(72) Erfinder: BECKER, Michael, 67374 Hanhofen (DE); KELLER, Horst, 69259 Wilhelmsfeld (DE); BERNARD, Jean-Luc, F-60600 Giencourt Breuil Le Vert (FR); ANDERSSON, Leif, S-241 31 Eslöv (SE)
(74) Vertreter: Bockhorni & Kollegen
(86) Internationale Anmeldenummer: PCT/EP2004/011060
(87) Internationale Veröffentlichungsnummer: WO 2005/035894

(56) Entgegenhaltungen:
- WO-A-89/12032
- WO-A-95/32925
- CH-A- 692 114
- US-A- 5 346 868
- US-A- 5 614 449
- US-B1- 6 284 684
- US-B1- 6 358 872

## Beschreibung

Die Erfindung betrifft ein Wärmedämm-Verbundsystem nach dem Patentanspruch 13 sowie ein Dämmelement nach dem Oberbegriff des Anspruches 1.

Derartige Wärmedämm-Verbundsysteme (WDVS) sind in der Praxis erfolgreich im Einsatz, wobei hierfür als Fasermaterial bevorzugt Steinwolle verwendet wird. Derartige Steinwolle wird dabei üblicherweise im Düsenblasverfahren oder mit externer Zentrifugierung, beispielsweise dem Kaskaden-Schleuderverfahren erzeugt. Dabei entstehen relativ grobe Fasern mit einem Durchmesser größer 4 bis 12 µm von relativ geringer Länge. Aufgrund der Herstellung fällt weiterhin ein erheblicher Anteil an unzerfasertem Material an, das in Form sogenannter "Perlen" im Produkt vorliegt und am Gewicht, nicht aber an der gewünschten Dämmwirkung, teilnimmt. Der Perlenanteil in Form von unzerfasertem Material, also gröberen Faserbestandteilen, liegt hierbei bei etwa 10 bis 30 % des Faseranteils mit Partikelgrößen von mindestens 50 µm.

Die WO 89/12032 offenbart Steinwollefasern, die mit herkömmlichen Verfahren hergestellt wurden, wobei ein mittlerer geometrischer Faserdurchmesser von 1,5 bis 3,5 µm erreicht wurde. Bei dem darin beschriebenen Verfahren entsteht ein Perlenanteil von ca. 27 %.

Neben der Verwendung von Steinwolle als Fassadendämmplatte sind auch solche aus Glaswolle bekannt, wobei ein einfaches, aber charakteristisches Unterscheidungsmerkmal zwischen Glas- und Steinwolle als Untergruppen der Gattung Mineralwolle darin besteht, dass das Alkali/Erdalkali Massenverhältnis der jeweiligen Glaszusammensetzung normalerweise bei Steinwolle < 1 und bei Glaswolle > 1 ist. Dies bedeutet, dass Steinwolle einen hohen Anteil CaO + MgO von beispielsweise 20 bis 30 Gew.-% hat und einen relativ niedrigen Anteil von Na₂O + K₂O von beispielsweise etwa 5 Gew.-%. Derartige Steinwolle ist beispielsweise in der US 6,358,872 beschrieben. Glaswolle, wie beispielsweise aus der WO 95/32925, hingegen hat in der Regel Erdalkalibestandteile von beispielsweise etwa 10 Gew.-% und Alkalibestandteile von über 15 Gew.-%. Diese Zahlen gelten insbesondere für biolösliche Zusammensetzungen, also solche, die in einem physiologischen Milieu abbaubar sind.

In der US 5,346,868 werden derartige in einem physiologischen Milieu abbaubare Mineralfasern beschrieben. Die US 5,614,449 beschreibt Mineralwolle mit einem Alkali-/Erdalkali-Massenverhältnis < 1 und einen mittleren Faserdurchmesser von 3 bis 4 µm.

Zur Herstellung der Fassadendämmplatten für ein solches WDVS werden die ausgezogenen Fasern der Steinwolle wie beispielsweise in der CH 692114 beschrieben auf einem Produktionsband abgelegt und sodann in Förderrichtung gestaucht, um einen erhöhten Anteil der Fasern stärker in Dickenrichtung der Steinwollebahn auszurichten, so dass diese quasi einen Lamellencharakter annimmt. Im unmittelbaren Anschluss daran erfolgt die Aushärtung unter gleichzeitiger Reduktion auf die gewünschten Plattendicken, so dass das Fasergefüge in dem gestauchten Zustand fixiert wird. Die so hergestellten Steinwolle-Platten können an die Fassade beispielsweise eines Massivbaus angeklebt und/oder mit Dübeln an dieser befestigt werden, wonach dann das Aufbringen eines üblicherweise armierten Putzes erfolgen kann, der von der Fassadendämmplatte getragen wird. Die Gesamtheit dieser Elemente bildet das WDVS. Die erhöhte Ausrichtung der Fasern in Plattendickenrichtung durch den Stauchvorgang führt zu der erforderlichen Abreißfestigkeit des Steinwollematerials gegen Windsogkräfte, Putzschwindung, Temperaturdehnung und Gewichtskraft des Putzes.

Derartige Fassadendämmplatten aus Steinwolle werden mit Rohdichten von etwa 120 bis 150 kg/m³ hergestellt und weisen eine relativ große Eigenfestigkeit auf. Durch die hohe Rohdichte ist im Falle einer Verdübelung die geforderte Dübeldurchzugsfestigkeit ohne weiteres gegeben, und im Verbund mit der Stauchung bereitet auch das Erreichen der geforderten Abreißfestigkeit kein Problem. In der CH 692114 werden bereits bei einer Rohdichte von 90 kg/m³ für Steinwolle Abreißfestigkeiten von 13 bis 18 kPa bzw. 20 kPa erreicht.

Es ist auch bekannt, derartige Fassadendämmplatten aus herkömmlicher Steinwolle als sogenannte Lamellenplatten herzustellen. Hierzu wird die Steinwolle ebenfalls in Produktionsrichtung gestaucht und ausgehärtet, danach aber in Produktionsrichtung zu sogenannten Lamellen geschnitten, derart, dass die Schneidbreite der einzelnen Lamellen die Dicke der so erzeugten Platte bestimmt, wobei die Schnittflächen die Hauptflächen der Platte bilden. Hierdurch wird der Umstand genutzt, dass bei der Faserablage der Fasern unterhalb des Zerfaserungsaggregats ein Großteil der weit überwiegend horizontal abgelegten Fasern in Querrichtung zur Produktionsrichtung abgelegt wird, so dass eine Lamelle eine Vielzahl von Fasern enthält, die in ihrer Dickenrichtung verlaufen. Diese Fasern liegen in dieser Ausrichtung auch an den Schnittflächen und damit an den Großflächen der Lamellen vor, während sie bei Stauchplatten im wesentlichen auf den Innenbereich der Platte beschränkt sind und im Bereich der Großfläche überwiegend oberflächenparallel ausgerichtete Fasern vorliegen.

Aufgrund dieser Ausrichtung der Fasern in den Lamellenplatten ist die Abreißfestigkeit äußerst hoch, da die Fasern im wesentlichen in Richtung von einer Plattengroßfläche zur anderen Plattengroßfläche ausgerichtet sind und in diese Richtung wirkende Zugkräfte, wie sie bei einer Abreißtendenz auftreten, als Zugkräfte in den einzelnen Fasern übertragen. Daher können Lamellenplatten aus Steinwolle mit einer Rohdichte von beispielsweise 80 kg/m³ verwendet werden und eignen sich insbesondere für eine klebende Befestigung, wobei jedoch auch bei dieser Rohdichte noch eine ausreichende Dübeldurchzugsfestigkeit erzielt werden kann, welche, insbesondere bei Anbringung der Lamellenplatten auf einem nicht tragfähigem Untergrund, eine Befestigung durch Dübel erlaubt. Derartige Lamellenplatten aus Steinwolle sind somit leichter als entsprechende Stauchplatten und haben einen geringeren Materialeinsatz, sind aber im Hinblick auf die kompliziertere Herstellung insbesondere bei größeren Plattenformaten nicht unbedingt preisgünstiger.

Während derartige Putzträger-Fassadendämmplatten aus Steinwolle sich in der Praxis hervorragend bewährt haben, bestehen mit derartigen Steinwolleplatten Schwierigkeiten, günstige λ-Rechenwerte zu erreichen. In Deutschland wird der Wärmedurchlasswiderstand derartiger Dämmplatten gemäß DIN 18165 in Wärmeleitfähigkeitsgruppen eingeteilt, wobei etwa die Wärmeleitfähigkeitsgruppe 035 bedeutet, dass der λ-Rechenwert berechnet nach DIN 52612 35 mW/mK ist. Gestauchte Fassadendämmplatten aus herkömmlicher Steinwolle können mit Schwierigkeiten gerade die Wärmeleitfähigkeitsgruppe 040 erreichen. Lamellenplatten haben zwar relativ geringe Rohdichte, jedoch eine in Bezug auf das Wärmedämmvermögen ungünstige Faserausrichtung, so dass häufig nur die Wärmeleitfähigkeitsgruppe 045 erreicht wird. Stauchplatten haben andererseits zwar eine unter Wärmedämmgesichtspunkten günstigere Faserausrichtung in Richtung quer zur Wärmestromrichtung, müssen aber höhere Abreißfestigkeiten von mehr als 7 kPa und insbesondere von mehr als 14 kPa durch erhöhte Rohdichte erzielen, was wiederum zur Folge hat, dass die Wärmeleitfähigkeitsgruppe 040 in der Regel nicht unterschritten werden kann. Lediglich dann, wenn im Anwendungsfall die Abreißfestigkeit unter 7 kPa liegt, kann durch Rückgriff auf eine ungestauchte, also laminare Platte relativ geringer Rohdichte, von nur wenig über 100 kg/m³, die Wärmeleitfähigkeitsgruppe 035 erreicht werden.

Man hat auch schon versucht, mit Fassadendämmplatten aus Glaswolle zu arbeiten, die üblicherweise durch innere Zentrifugierung hergestellt wird. Dabei ist zu beachten, dass Glaswolle einem alkalischen Angriff aus dem Putzmaterial ausgesetzt ist, der zu einer Faserauflösung führen kann.

Daher hat man versucht, das verbesserte Wärmedämmvermögen von Glaswolle zur leichteren Erzielung der Wärmeleitfähigkeitsgruppe 035 dadurch zu nutzen, dass auf eine laminare Glaswolleplatte auf der Seite des Putzes werkseitig eine Beschichtung aufgebracht wurde, welche eine Berührung der Glaswolle mit dem Putz verhindern soll. In die Beschichtung ist ein Textilglas-Gittergewebe eingelegt. Auch derartige Fassadendämmplatten sind im praktischen Einsatz und haben sich für eine Dübelbefestigung auch durchaus bewährt. Das Textilglas-Gittergewebe mit einer Maschenweite von beispielsweise 18 mm x 12 mm weist eine Reißfestigkeit auf, die auch nach künstlicher Alterung in Natronlauge oder alkalischer Lösung nur um höchstens 50 % abfallen darf. Zur Stoßübergreifung muss das Textilglas-Gittergewebe an je einer Längs- und Querseite ca. 10 cm überstehen. Die Verwendung einer solchen beschichteten Glaswolle-Fassadedämmplatte ist jedoch nur in einem spezifizierten WDVS mit speziellen Gelenkdübeln mit einem Dämmstoffhalteteller von 60 mm Durchmesser sowie in Verbindung mit einem für das WDVS spezifizierten Putz zulässig. Für die Dübeldurchzugsfestigkeit sowie die Abreißfestigkeit ist ausschließlich das Textilglas-Gittergewebe im Verbund mit den speziellen Gelenkdübeln mit großem Halteteller ursächlich, welches werkseitig in die Beschichtung eingelegt ist.

Auf diese Weise gelingt es, die Wärmeleitfähigkeitgruppe 035 mit einer beschichteten und bewehrten Glaswolle-Fassadendämmplatte problemlos zu erreichen. Allerdings wird damit das Konzept, das Mineralwollematerial in einer solchen Art und Weise zur Verfügung zu stellen, dass es die erforderliche Abreißfestigkeit und, im Falle der Dübelbefestigung, Dübeldurchzugsfestigkeit selbst aufweist, verlassen und statt dessen auf eine eigene Stützkonstruktion in Form der in die Beschichtung eingebetteten Bewehrung zurückgegriffen. Dadurch ist die Verwendbarkeit auf vorspezifizierte Komponenten des gesamten WDVS eingeschränkt, sowie dass bei der Herstellung zusätzlicher Materialaufwand und zusätzliche Herstellschritte erforderlich sind, und das Textilglas-Gittergewebe bei Zuschneidarbeiten stört.

Aus der DE 101 38 069 ist auch bereits ein WDVS mit einer Putzträger-Fassadendämmplatte aus Glaswolle bekannt, bei dem die unbeschichtete Mineralwolleoberfläche zur direkten Aufbringung der Putzschicht verwendbar ist, also keiner Abdeckung oder Bewehrung bedarf. Hier handelt es sich jedoch um ganz spezielle Glaswollefasern, die in bestimmter Weise hydrophob ausgerüstet sind. Ansonsten wird wie üblicherweise bei herkömmlicher Steinwolle mit gestauchten Platten gearbeitet, so dass bei verminderter Rohdichte eine ausreichende Dübeldurchzugsfestigkeit und eine Abreißfestigkeit von mehr als 14 kPa bei einer Wärmeleitfähigkeitsgruppe von 040 erreicht werden kann. Aus der CH 692114 ist ein Dämmelement mit allen Merkmalen des Oberbegriffs des Anspruchs 1 bekannt.

Allerdings ist der Einsatz von Fassadendämmplatten aus Glaswollematerial durch die in der Praxis übliche Forderung nach einem Schmelzpunkt größer 1000°C (durch herkömmliche Steinwolle impliziert) beschränkt, welche insbesondere in Bereichen des öffentlichen Verkehrs und bei hohen Gebäuden gestellt wird.

Dem gegenüber liegt der Erfindung die Aufgabe zugrunde, ein Wärmedämm-Verbundsystem mit einer Wärmeleitfähigkeit entsprechend der Wärmeleitfähigkeitsgruppe 035 zu schaffen, welches eine für den jeweiligen Anwendungsfall ausreichend hohe Abreißfestigkeit bei mindestens 25% verringertem Gewicht gegenüber herkömmlicher Steinwolle aufweist, und gleichzeitig die Anforderungen der Praxis im Bereich von öffentlichem Verkehr und bei hohen Gebäuden gewährleistet sind, wie sie z.B. in den Qualitätsrichtlinien für Mineralwolle-Fassaden-Dämmplatten bei Wärmedämm-Verbundsystemen festgelegt sind (hrsg. vom Fachverband-Wärmedämm-Verbundsysteme e.V.).

Diese Aufgabe wird erfindungsgemäß durch die im kennzeichnenden Teil des Anspruchs 1 enthaltenen Merkmalen gelöst, wobei zweckmäßige Weiterbildungen der Erfindung durch die Merkmale der Unteransprüche gekennzeichnet sind. Schließlich schafft die Erfindung ein Dämmelement für ein WDVS, welches durch die kennzeichnenden Merkmale wenigstens eines der Ansprüche 1 bis 11 bestimmt ist.

Nach Maßgabe der Erfindung zeichnet sich das WDVS durch ein Dämmelement mit besonders fein ausgelegter Faserstruktur aus, welche durch Verwendung von Fasern bestimmt ist, deren mittlerer geometrischer Durchmesser ≤ 4 µm ist. Dadurch ergibt sich ein Fasergebilde, welches bei vorgegebener Rohdichte gegenüber herkömmlicher Steinwolle weit mehr Fasern pro Raumeinheit aufweist, was dazu führt, dass auch mehr Kreuzungspunkte zwischen den Fasern vorliegen. Durch Einstellung des Bindemittelanteils innerhalb des Dämmelements auf einen Bereich von 4,5 Gew.-% bis 7 Gew.-%, bezogen auf die Fasermasse des Dämmelements, ergibt sich über das Bindemittel insbesondere im Bereich der vielen Kreuzungspunkte ein stabiler Faserverbund des Mineralwollegebildes, welches sich durch hohe Abreißfestigkeit des Dämmelements auszeichnet. Dadurch dass die Rohdichte im Bereich von 40 bis 100 kg/m³ liegt, ergeben sich im Vergleich zu Dämmelementen aus herkömmlicher Steinwolle erhebliche Gewichtsvorteile, was sich wiederum günstig auf die Befestigungsart, etwa Kleben und/oder Dübeln auswirkt. Je geringer das Gewicht des zu befestigenden Dämmelements ist, je einfacher können die Befestigungsmaßnahmen ausgeführt werden. Dabei ist das Fasergebilde des Dämmelements jedoch ausreichend stabil, so dass auch die geforderte Dübeldurchzugsfestigkeit ohne weiteres gegeben ist. Trotz der verminderten Rohdichte ist dabei aber der Wärmedurchlasswiderstand offenbar aufgrund der feinausgelegten Faserstruktur höher als bei herkömmlichen Steinwollefasern hoher Rohdichte, so dass bei ausreichender mechanischer Festigkeit ohne weiteres die Wärmeleitfähigkeitsgruppe 035 erreicht wird. Da die Fasern zudem in ihrer Zusammensetzung auf ein Alkali/Erdalkali-Massenverhältnis von < 1 abgestellt sind, zeichnen sich die Fasern durch hohe Temperaturbeständigkeit aus, so dass das erfindungsgemäße Dämmelement der herkömmlichen Steinwolle vergleichbare Brandschutzeigenschaften aufweist und deswegen ohne Beschränkung auch im Bereich von öffentlichem Verkehr und in hohen Gebäuden eingesetzt werden kann.

Die Erfindung schafft damit eine Symbiose zwischen Glaswolle und herkömmlicher Steinwolle, indem sie strukturmäßig glaswollartig, also aus Fasern mit geringem Durchmesser und als Dämmelement mit geringer Rohdichte, ausgebildet ist, sich jedoch gleichwohl durch die hohe Temperaturbeständigkeit herkömmlicher Steinwollefasern auszeichnet. Deswegen bedarf das über den Querschnitt homogen ausgebildete Dämmelement des erfindungsgemäßen WDVS keiner besonderen Behandlung, wie es im Falle von Fassadendämmplatten aus Glaswolle erforderlich ist, bei denen alkaliresistente Beschichtungen und das Einbetten von Gittergeweben oder eine entsprechend hydrophobe Ausrüstung von Glaswollefasern erforderlich ist. Gegenüber Dämmelementen aus herkömmlicher Steinwolle zeichnet sich die Erfindung durch mechanisch stabile und elastische Fasern aus, die eine ausreichend steife Struktur mit geringem Bindemitteleintrag auch bei geringerer Rohdichte erreicht und damit erhebliche Gewichtsvorteile gegenüber Dämmelementen aus herkömmlicher Steinwolle bringt.

Zweckmäßigerweise wird als Bindemittel ein organisches Bindemittel, wie etwa Phenol-Formaldehydharz oder Melaminharz verwendet, wobei in Folge des im Prinzip geringen Bindemittelanteils von 4,5 bis 7 Gew.-% auch der Brandlasteintrag vergleichsweise gering ist. Diese organischen Bindemittel wirken sich positiv für den Faserverbund aus, da sie eine gute Affinität zu den Fasern aufweisen und damit eine gute Durchnetzung des feinstrukturierten Gebildes ermöglichen.

In vorteilhafter Weise liegt der Anteil des Bindemittel bezogen auf die Fasermasse des Dämmelements im Bereich von nur 4,5 % bis 6 Gew.-%, wobei dieser Bindemittelanteil ausreicht, um eine vergleichsweise steife Fassadendämmplatte zu schaffen. Dies beruht auf der Kombination mit der fein ausgelegten Faserstruktur, bei der, bezogen auf einen vorgegebenen Fasergehalt, mehr feine Fasern und mehr Verknüpfungspunkte zwischen den Fasern vorliegen und somit durch das eingetragene Bindemittel ein stabiler und steifer Faserverbund erzielt wird.

Zweckmäßigerweise liegt die Rohdichte im Bereich von 70 bis 90 kg/m³, vorzugsweise beträgt sie etwa 85 kg/m³, so dass das erfindungsgemäße Dämmelement sich durch ein vergleichsweise geringes Gewicht ausweist bei gleichwohl großer Abreißfestigkeit und gewünschter Dübeldurchzugsfestigkeit.

Insbesondere zur Erzielung hoher Abreißfestigkeiten ist es zweckmäßig, dass das Dämmelement vor Aushärtung gestaucht wird, wobei sich gleichwohl eine Wärmeleitfähigkeit entsprechend der Wärmeleitfähigkeitsgruppe 035 erzielen lässt.

Für den Fall, dass eine geringere Abreißfestigkeit je nach Anwendungsfall ausreichend ist, kann das Dämmelement auch laminar ausgebildet sein. Bei laminarer Ausbildung des Dämmelements lässt sich ohne weiteres eine Wärmeleitfähigkeit entsprechend einer Wärmeleitfähigkeitsgruppe 030 erzielen. Da sich bei herkömmlicher Faserbildung ohnedies eine laminare Ausrichtung der Fasern innerhalb des Mineralwollevlieses ergibt, lässt sich ein solches Dämmelement sehr einfach herstellen und führt im Verbund mit der geringen Rohdichte im Bereich von 40 bis 100 kg/m³ zu entsprechenden Kostenvorteilen.

Wie Eingangs bereits beschrieben, ist es auch möglich, im Rahmen eines WDVS die dabei verwendeten Dämmelemente als Lamellenplatten auszubilden, wobei diese ebenfalls aus der erfindungsgemäßen Mineralwolle hergestellt sind und eine Rohdichte im Bereich von 40 bis 70 kg/m³, vorzugsweise etwa 60 kg/m³, aufweisen.

Besonders vorteilhaft ist es, dass das Dämmelement in der Form einer gestauchten Platte eine Abreißfestigkeit von mindestens 14 kPa, in der Form einer laminaren Platte eine Abreißfestigkeit von mindestens 5 kPa, oder in der Form einer Lamelle eine Abreißfestigkeit von mindestens 80 kPa aufweist.

Zweckmäßigerweise weist das Dämmelement einen Schmelzpunkt nach DIN 4102, Teil 17 von größer 1.000 °C auf, was entsprechende Vorteile bezüglich der Temperaturbeständigkeit des Mineralwollegebildes zur Folge hat.

In vorteilhafter Weise sind die Mineralfasern des Dämmelements durch die an sich bekannte innere Zentrifugierung im Schleuderkorb-Verfahren mit einer Temperatur am Schleuderkorb von mindestens 1.100 °C hergestellt, wodurch sich in einfacher Weise Fasern mit dem anspruchsgemäß geringen Faserdurchmesser herstellen lassen. Ferner ist die dabei erzielte Mineralwolle praktisch perlenfrei, das heißt, der Anteil an Perlen ist < 1 %, was einen weiteren wesentlichen Vorteil gegenüber herkömmlicher Steinwolle mit sich bringt. Das Verfahren der inneren Zentrifugierung im Schleuderkorb-Verfahren ist für Mineralfasern bereits bekannt, wozu ausdrücklich auf die EP 0 551 476, die EP 0 583 792, die WO 94/04468 und die US 6,284,684 wegen weiterer Einzelheiten verwiesen und Bezug genommen wird.

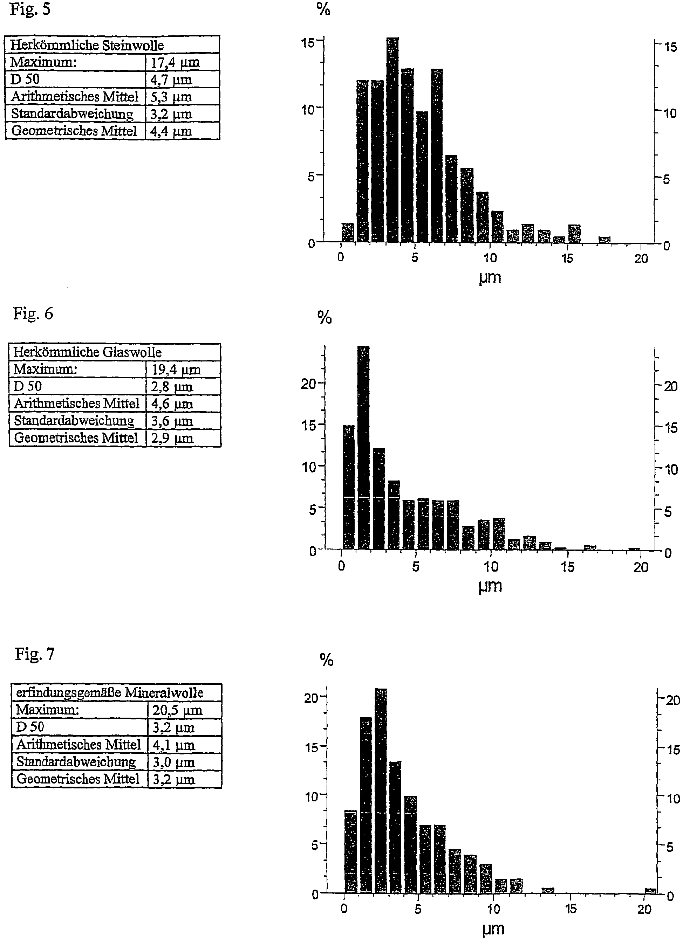

Der für die Faserfeinheit verantwortliche mittlere geometrische Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 5, 6 und 7).

Vorteilhaft sind die Dämmelemente bzw. Lamellen aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Dämmelemente bzw. Lamelle bei Herstellung, Verarbeitung, Nutzung und Entsorgung gewährleistet ist.

Nachfolgend ist in einer Tabelle 1 die bevorzugte Zusammensetzung der Mineralfasern eines erfindungsgemäßen Dämmelementes bzw. Lamelle bereichsweise in Gew.-% angegeben.

**Tabelle 1**

| | | | | | |
|---|---|---|---|---|---|
| SiO₂ | 39 - 55 | % | vorzugsweise | 39 - 52 | % |
| Al₂O₃ | 16 - 27 | % | vorzugsweise | 16 - 26 | % |
| CaO | 6 - 20 | % | vorzugsweise | 8 - 18 | % |
| MgO | 1 - 5 | % | vorzugsweise | 1 - 4,9 | % |
| Na₂O | 0 - 15 | % | vorzugsweise | 2 - 12 | % |
| K₂O | 0 - 15 | % | vorzugsweise | 2 - 12 | % |
| R₂O(Na₂O+K₂O) | 10-14,7 | % | vorzugsweise | 10-13,5 | % |
| P₂O₅ | 0-3 | % | insbesondere | 0-2 | % |
| Fe₂O₃ (Eisen gesamt) | 1,5-15 | % | insbesondere | 3,2-8 | % |
| B₂O₃ | 0-2 | % | vorzugsweise | 0 - 1 | % |
| TiO₂ | 0-2 | % | vorzugsweise | 0,4-1 | % |
| Sonstiges | 0-2,0 | % | | | |

Ein bevorzugter engerer Bereich von SiO₂ beträgt 39-44 %, insbesondere 40-43 %. Ein bevorzugter engerer Bereich für CaO beträgt 9,5 bis 20 %, insbesondere 10 bis 18 %.

Die erfindungsgemäße Zusammensetzung zeichnet sich insbesondere durch die Kombination aus, dass ein hoher Al₂O₃ Gehalt zwischen 16 und 27 %, vorzugsweise größer als 17 % und/oder vorzugsweise geringer als 25 % bei einer Summe der netzwerkbildenden Elemente SiO₂ und Al₂O₃ von zwischen 57 und 75 % beträgt, vorzugsweise größer als 60 % und/oder vorzugsweise geringer als 72 %, mit einem Anteil der Summe aus Na₂O und K₂O, der relativ hoch ist, jedoch in einem Bereich von 10-14,7 %, vorzugsweise 10-13,5 % liegt, bei einem Magnesiumoxidanteil in einem Anteil von wenigsten 1 %.

Diese Zusammensetzungen zeichnen sich durch ein beträchtlich verbessertes Verhalten bei sehr hohen Temperaturen aus.

In Bezug auf Al₂O₃ beträgt ein engerer bevorzugter Bereich 17 bis 25,5 %, insbesondere 20 bis 25 % und zwar vorzugsweise 21 bis 24,5 %, insbesondere etwa 22-23 oder 24 Gew.-%.

Gute feuerfeste Eigenschaften werden insbesondere bei Einstellung des Magnesiumoxidgehalts auf mindestens 1,5 %, insbesondere 2 % und zwar vorzugsweise 2 bis 5 % und dabei besonders bevorzugt ≥2,5 % oder 3 %. Ein hoher Magnesiumoxidanteil wirkt sich positiv gegen ein Absenken der Viskosität aus und wirkt sich deswegen günstig gegen ein Sinten des Materials aus.

Insbesondere ist bevorzugt, dass dann, wenn der Anteil von Al₂O₃ ≥22 % beträgt, der Anteil an Magnesiumoxid vorzugsweise wenigstens 1 %, insbesondere bevorzugt 1 bis 4 % beträgt, wobei ein weiterer bevorzugter Bereich von Magnesiumoxid 1 bis 2 % und zwar insbesondere 1,2 bis 1,6 % beträgt. Der Anteil an Aluminiumoxid ist vorzugsweise auf 25 % begrenzt, um eine ausreichend geringe Liquidustemperatur zu erhalten. Liegt der Aluminiumoxidanteil in einem Bereich von etwa 17 bis 22 %, beträgt der Anteil an Magnesiumoxid vorzugsweise wenigstens 2 %, insbesondere etwa 2 bis 5 %.

Das Dämmelement gemäß der Erfindung in Form einer Platte zeichnet sich durch einen leichtgewichtigen, gleichwohl mechanisch stabilen Aufbau mit hoher Temperaturbeständigkeit aus, und erfüllt darüber hinaus mindestens auch bei geringen Rohdichten die gemäß DIN 52612 vorgeschriebenen Anforderungen an die Wärmeleitfähigkeitsgruppen von 035. Entsprechend erreicht man bei der Ausbildung als Lamelle eine Wärmeleitfähigkeitsgruppe von 040.

Die Erfindung wird nachfolgend anhand von mehreren Ausführungsformen näher beschrieben und erläutert. Es zeigen:
- Fig. 1: eine Ausschnittsdarstellung aus einem erfindungsgemäßen WDVS,
- Fig. 2: einen Teilschnitt gemäß Linie II in Fig. 1 durch eine erfindungsgemäß zu verwendende Fassadendämmplatte in Form einer Stauchplatte, und
- Fig. 3: einen entsprechenden Teilschnitt einer erfindungsgemäß zu verwendenden Fassadendämmplatte in Form einer Lamellenplatte,

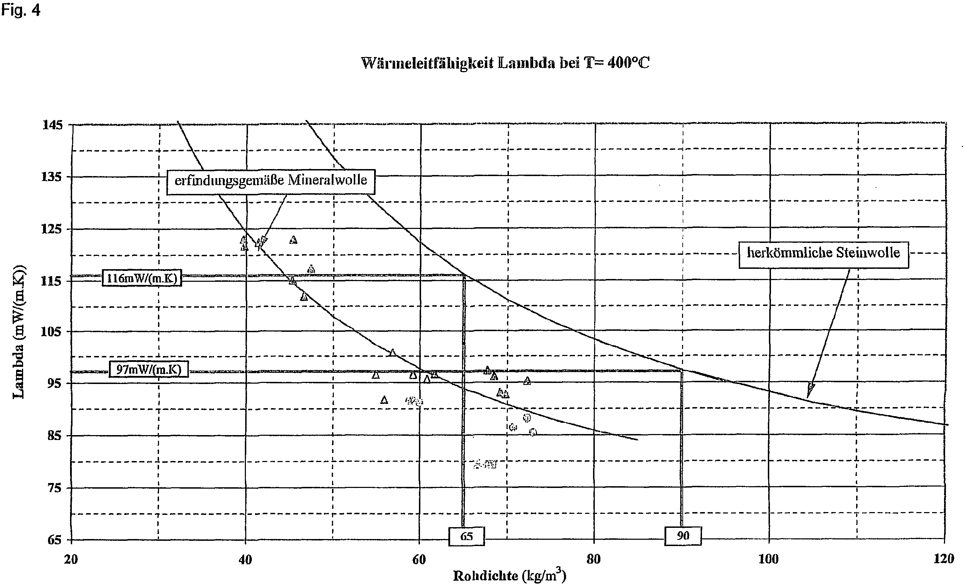

- Fig. 4: ein Diagramm eines Vergleichsversuchs im Rahmen einer Wärmeleitfähigkeitsprüfung bei 400°C,
- Fig. 5: ein typisches Faserhistogramm einer herkömmlichen Steinwolle,
- Fig. 6: ein typisches Faserhistogramm einer herkömmlichen Glaswolle, und
- Fig. 7: ein typisches Faserhistogramm einer erfindungsgemäßen Mineralwolle.

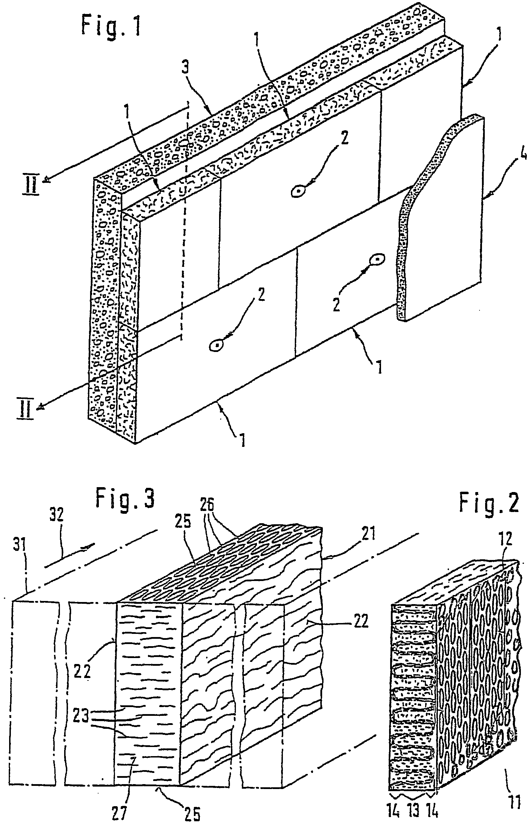

In Fig. 1 sind Putzträger-Fassadendämmplatten 1 mittels eines nicht näher dargestellten Klebers an eine Massivwand 3 geklebt und mit schematisch veranschaulichten Dübeln 2 an dieser befestigt. Die Fassadendämmplatten 1 sind zur Außenseite hin von einer üblicherweise armierten Putzschicht 4 (in Fig. 1 zur besseren Veranschaulichung mit übertriebener Dicke dargestellt) abgedeckt, welche von den Fassadendämmplatten 1 getragen wird. Ein solcher grundsätzlicher Aufbau eines WDVS ist bekannt und üblich, so dass sich ein näheres Eingehen hierauf erübrigt. Selbstverständlich können die Dübel in jeder geeigneten und für die jeweilige Halterung der Fassadendämmplatten erforderlichen Weise angeordnet und ausgebildet sein

Bei der Anbringung des WDVS wird die Massivwand 3 zunächst mit mit Kleber versehenen Fassadendämmplatten 1 in der veranschaulichten Weise belegt und dann werden die Dübel 2 an der Fassade der Massivwand 3 befestigt. Anschließend wird auf die Außenfläche der Fassadendämmplatte 1 die üblicherweise armierte Putzschicht 4 in der Regel in mehreren Schichten aufgebracht. Das Gewicht der Putzschicht 4 sowie die hierauf einwirkenden Kräfte wie insbesondere Windsogkräfte müssen somit von den Fasern der Fassadendämmplatten 1 gehalten werden, wobei die Fassadendämmplatten 1 ihrerseits wiederum gegen die Massivwand 3 durch die Dübel 2 gehalten sind. Infolgedessen darf eine gewisse Dübeldurchzugskraft nicht unterschritten werden, um zu vermeiden, dass die Fassadendämmplatten 1 unter der Einwirkung dieser Kräfte zusammen mit der Putzschicht 4 von der Massivwand 3 insbesondere unter Einwirkung von Windsogkräften abgehoben werden. Weiter benötigen die Fassadendämmplatten 1 eine erhebliche Abreiß- oder Querzugfestigkeit, damit sie die von der Putzschicht 4 einwirkenden Kräfte aufnehmen können.

Wesentlich für Fassadendämmelemente ist die Erzielung guter Wärmeleitfähigkeitswerte (λ-Rechenwerte nach DIN 18165), wobei die Wärmeleitfähigkeitsgruppe 035 oder besser angestrebt wird. Infolgedessen kann zur Erhöhung der erforderlichen Dübeldurchzugsfestigkeit sowie Abreißfestigkeit das erfindungsgemäß aus feinen, elastischen und langen Mineralwollefasern bestehende Mineralwollevlies im Zuge der Herstellung der Fassadendämmplatten 1 gestaucht und gemäß Fig. 2 als sogenannte Stauchplatte 11 eingesetzt werden. Hierzu werden die Platten nach Aushärtung der gestauchten Bahn durch Ablängen von der Mineralwollebahn hergestellt, wobei die Großflächen der Mineralwollebahn auch die Großflächen 12 der Stauchplatten 11 bilden. Infolge des Stauchvorgangs liegt eine wesentlich erhöhte Anzahl von Mineralfasern 13 im Inneren der Stauchplatte 11 in einer Ausrichtung der Dickenrichtung der Platte vor und erhöht somit die Abreißfestigkeit der Fassadendämmplatte 1.

In diesem Ausführungsbeispiel weist die dargestellte Fassadendämmplatte eine Rohdichte von 85 kg/m³ bei einem Bindemittelanteil von 5,5 Gew.-% auf. Diese Fassadendämmplatte ist gestaucht und besitzt eine Wärmeleitfähigkeit entsprechend der Wärmeleitfähigkeitsgruppe 035. Der mittlere geometrische Durchmesser der Fasern beträgt 3,2 µm.

Die Zusammensetzung in Gew.-% der konventionellen, also aus herkömmlicher Steinwolle gebildeten Dämmelemente bzw. Lamelle, sowie aus herkömmlicher Glaswolle gebildeten Dämmelemente bzw. Lamelle und der erfindungsgemäßen Dämmelemente bzw. Lamelle ergibt sich aus Tabelle 2, wobei die herkömmliche Steinwolle sowie das erfindungsgemäße Dämmelemente bzw. Lamelle einen Schmelzpunkt von mindestens 1000°C nach DIN 4102 Teil 17 aufweisen.

**Tabelle 2**

| Material | herkömmliche Steinwolle | herkömmliche Glaswolle | erfindungsgemäße Dämmelemente |
|---|---|---|---|
| SiO₂ | 57,2 | 65 | 41,2 |
| Al₂O₃ | 1,7 | 1,7 | 23,7 |
| Fe₂O₃ | 4,1 | 0,4 | 5,6 |
| TiO₂ | 0,3 | | 0,7 |
| CaO | 22,8 | 7,8 | 14,4 |
| MgO | 8,5 | 2,6 | 1,5 |
| Na₂O | 4,6 | 16,4 | 5,4 |
| K₂O | 0,8 | 0,6 | 5_{,}2 |
| B₂O₃ | | 5 | |
| P₂O₅ | | 0,15 | 0,75 |
| MnO | | 0,3 | 0,6 |
| SrO | | | 0_{,}5 |
| BaO | | | 0,34 |
| Total | 100 | 99,95 | 99,89 |

Die Faserdämmplatte zeichnet sich durch eine hohe Abreißfestigkeit von 15 kPa aus.

Bei der Ausführungsform gemäß Fig. 3 ist die Fassadendämmplatte 1 als Lamellenplatte ausgebildet. Diese ist dadurch erzeugt, dass eine Mineralwollebahn, wie sie strichpunktiert im Querschnitt angedeutet und mit 31 bezeichnet ist, mit sehr hoher Dicke hergestellt und in Produktionsrichtung (Pfeil 32) in Streifen geschnitten wird, so dass die einzelnen Lamellen 21 erhalten werden. An den oberen (und unteren) Schmalseiten 25 der Lamellen 21 sind die Abdrücke der sogenannten "Flights" 26 zu erkennen, also von Druckbändern, zwischen denen die Mineralwollebahn 31 in einem Aushärteofen auf die gegenüber dem einlaufenden Rohvlies geringere, gewünschte und definierte Dicke komprimiert wird. Zwischen den beiden Großflächen 22 einer Lamelle 21 verlaufen quasi durchgehend rechtwinklig zu beiden Großflächen die Mineralfasern 23, wie auf der Stirnfläche 27 angedeutet. Diese Ausrichtung der Mineralfasern 23 resultiert zum Einen aus der Ablage der Mineralfasern im Mineralwollevlies in Querrichtung zur Produktionsrichtung (Pfeil 32) und zum Anderen durch eine Stauchung des Rohvlieses. Die Lamellenplatte wird mit der Großfläche 22 an der Massivwand 3 durch Kleben und Dübeln angebracht. Die Putzschicht 4 wird dann unmittelbar auf der anderen Großfläche 22 aufgebracht.

Bei einem derartigen Fassadenaufbau ergibt sich eine hervorragende Abreißfestigkeit, welche bereits bei Rohdichten ab 40 kg/m³ auch die gewünschte Dübeldurchzugsfestigkeit aufweist und trotz der unter Wärmedämmgesichtspunkten ungünstigen Faserausrichtung infolge der geringen Rohdichte eine Erzielung der Wärmeleitfähigkeitsgruppe 040 ermöglicht. Im Beispielsfall liegt die Rohdichte der Lamelle 21 bei 60 kg/m³.

In nicht näher dargestellter Weise kann anstelle der Stauchplatte 11 oder der Lamellenplatte 21 auch eine laminare Platte verwendet werden, bei der die Fasern im wesentlichen parallel zu den Großflächen der Platten ausgerichtet sind. Dies ist die Faserablage, wie sie sich unter dem Zerfaserungsaggregat von selbst ergibt, so dass keinerlei Nachbearbeitungen erforderlich sind. Im Verbund mit einer Rohdichte von beispielsweise 80 kg/m³ ergibt sich somit eine einfache und kostengünstige Herstellung bei relativ geringem Materialeinsatz und so eine kostengünstige Fassadendämmplatte. Insbesondere aber ergibt die im wesentlichen parallel zu den Großflächen liegende Ausrichtung der Fasern einen hohen Wärmedurchlasswiderstand, so dass mit einer solchen laminaren Platte erstmals im Vergleich zu Fassadendämmplatten aus herkömmlicher Steinwolle ein λ-Rechenwert von unter 30 mW/mK, also die Wärmeleitfähigkeitsgruppe 030 erreicht wird

Auch bei der Verwendung von Stauchplatten 11 liegt bei einer Rohdichte von 70 bis 90 kg/m³ der λ-Rechenwert bei etwa 32 mW/mK, während er bei einer entsprechenden Platte aus Glaswollmaterial aus demselben Rohdichtebereich nur bei 35 mW/mK liegt. Während also die erfindungsgemäße Stauchplatte die Wärmeleitfähigkeitsgruppe 035 einhält, erreicht die Stauchplatte aus Glaswollmaterial nur die Wärmeleitfähigkeitsgruppe 040.

Da die Fasern zudem in ihrer Zusammensetzung auf ein Alkah/Erdalkali-Massenverhältnis von < 1 abgestellt sind, ist ein alkalischer Angriff durch das Putzmaterial nicht zu befürchten, und somit kann ohne Zwischenschaltung alkaliresistenter Schutzschichten die Putzschicht 4 unmittelbar auf den jeweiligen Großflächen der Dämmelemente bzw. Lamellen aufgetragen werden.

Schließlich wird ein WDVS gefordert, das in der Form eines selbsttragenden Dämmelements als Sandwich mit zwei beabstandeten Außenschalen, zwischen denen mindestens eine Dämmschicht aus gebundenen, in einem physiologischen Milieu löslichen Mineralfasern angeordnet sind und welches insbesondere eine Temperaturbeständigkeit zur Einhaltung der Anforderungen der normativen Feuerwiderstandsklassen oder dergl. aufweist, das gegenüber herkömmlichen derartigen Dämmelementen bei Einhaltung hoher normativer Feuerwiderstandsanforderungen eine Gewichtseinsparung um mindestens 20 % erlaubt und dabei die normativen Forderungen eines Alterungsverhaltens (DUR2-Test nach prEN 14509) erfüllt.

Die Brandschutzanforderungen von Brandschutzelementen sind gemäß DIN 4102, Teil 5 in Feuerwiderstandsklassen klassifiziert. Diese Feuerwiderstandsklassen gelten auch für derartige Sandwich-Dämmelemente. Die Feuerwiderstandsfähigkeit eines Sandwich-Dämmelements wird hierbei durch die Zeitdauer bestimmt, bei der bei einem bestimmten Temperaturanstieg an einer Seite des Elements die andere "kalte" Seite des Elements unter einer definierten Grenztemperatur bleibt. Die Zeitdauer in Minuten bis zum Erreichen der Grenztemperatur auf der kalten Seite wird als Standzeit bezeichnet. Diese bestimmt die Einstufung in die verschiedenen Feuerwiderstandklassen. So bedeutet eine Einstufung eines Elements in die Feuerwiderstandsklasse F30 eine mindestens 30-minütige Standzeit bzw. F60 und F90 eine 60-minütige und 90-minütige Standzeit. Während dieser Standzeiten muß sichergestellt sein, dass die Brandschutzwirkung des Sandwich-Dämmelements gewährleistet ist, d.h. es darf während dieser Zeiten keine Flamme auf der dem Feuer abgewandten Seite austreten, die aus dem Verbrennen der in das Sandwich-Dämmelement eingetragenen Brandlast, sprich organisches Bindemittel, resultiert.

Diese Forderung wird in einfacher Weise durch einen speziellen Aufbau der in dem Sandwich-Dämmelement angeordneten Dämmschicht erreicht, und zwar derart, dass die Zusammensetzung der Mineralfasern der Dämmschicht ein Alkali/Erdalkali-Massenverhältnis von < 1 aufweist, und dass die Faserstruktur der Dämmschicht bestimmt ist durch einen mittleren geometrischen Faserdurchmesser ≤ 4 µm und einen Anteil des Bindemittels bezogen auf die Fasermasse der Dämmschicht von 4 bis 7 Gew.-%, insbesondere 4,5 bis 7 Gew.-%, mit einer Rohdichte im Bereich von 50 bis 80 kg/m³ bei den Feuerwiderstandsklassen F 30, F 45 und F 60 und mit einer Rohdichte im Bereich von 80 bis 120 kg/m³ bei den Feuerwiderstandsklassen F 90 und F 120.

Hiermit erhält das Sandwich-Dämmelement eine vergleichsweise geringe Rohdichte, d.h. Gewicht, so dass diese leichter sind und somit ermüdungsfreier transportiert und montiert werden können. Trotz eines vergleichsweise hohen absoluten Bindemittelgehaltes, der sich einerseits in einer relativ hohen Steifigkeit des Sandwich-Dämmelements ausdrückt, wirkt sich dieser andererseits nicht schädlich auf das Brandverhalten aus.

Dabei ist das erfindungsgemäße WDVS vorteilhaft so aufgebaut, dass die Dämmschicht durch mindestens eine Lamellenplatte gebildet ist, wogegen die Außenschalen vorzugsweise aus Metall bestehen und mit den Großflächen der Dämmschicht, z.B. mittels eines geschäumten Klebers auf PU-Basis, haftfest verklebt sind. Diese erhöhte Haftfestigkeit beruht auf dem Umstand, dass aufgrund der feinen Faserstruktur der Dämmschicht eine Vielzahl von Fasern in Kontakt mit dem Kleber sind und somit in ihrer Vielzahl zu einem Kraftschluß mit den Außenschalen zur Verfügung stehen. Ferner kann aufgrund der Tatsache, dass die Zusammensetzung der Mineralfasern der Dämmschicht ein Alkali/Erdalkali-Massenverhältnis von < 1 aufweist, auch ein anorganischer, insbesondere alkalischer Kleber wie Wasserglas verwendet werden, was neben einer erheblichen Kostenreduzierung auch die Brandlast nicht unwesentlich verringert. Bezüglich der Verwendung von geschäumtem Kleber auf Wasserglasbasis wird ausdrücklich auf die EP 0 728 124 verwiesen.

Es hat sich gezeigt, dass die Druckspannung der Dämmschicht erfindungsgemäßer Sandwich-Dämmelemente vorzugsweise bei 10 % Stauchung nach DIN EN 826 ≥ 80 kPa und die Abreißfestigkeit DIN EN 1607 ≥ 100 kPa beträgt, wodurch den statischen Anforderungen, insbesondere beim Hallenbau Rechnung getragen werden kann.

Trotz der erheblichen Rohdichtereduzierung bei dem erfindungsgemäßen Sandwich-Dämmelement gegenüber einem solchen aus herkömmlicher Steinwolle hat sich gezeigt, dass das Alterungsverhaltens (DUR2-Test nach prEN 14509) praktisch vergleichbar ist. Bezüglich herkömmlicher Glaswolle hat sich gezeigt, dass hier das Alterungsverhalten um etwa einen Faktor 2 besser ist, und zwar bezogen auf den Verlust der Abreißfestigkeit nach DIN EN 1607. Zur Verdeutlichung ist festzuhalten, dass Verweise auf Normen und Prüfvorschriften sich jeweils auf die zum Anmeldetag aktuelle Fassung beziehen.

Schließlich wurden mehrere Vergleichsbeispiele durchgeführt und zwar anhand von gestauchten Dämmplatten, laminaren Dämmplatten und Lamellenplatten, wobei jeweils eine Dämmplatte aus herkömmlicher Steinwolle und herkömmlicher Glaswolle der erfindungsgemäßen IM-Dämmstoffplatte gegenübergestellt wurde. Die Ergebnisse sind in Tabelle 1 dargestellt, wobei in der ersten Spalte für Mindestanforderung die Abreißfestigkeit angegeben ist, die eingehalten werden muss. Die Kürzel GV bedeuten Glühverlust (Bindemittel) und WLG Wärmeleitfähigkeitsgruppe nach DIN-Norm 18165. Mit +-Zeichen wird angegeben, dass die gesetzten Kriterien erfüllt sind, mit - -Zeichen ist hingegen angegeben, dass die Kriterien nicht erfüllt sind.

| gestaucht | Mindestanforderung >15kPa | Rohdichte [kg/m³] | GV [%] | WLG | Schmelzpunkt >1000°C | Alkaliresistenz |
|---|---|---|---|---|---|---|
| Steinwolle | + | 125 | 3,7 | 040 | + | + |
| Glaswolle | + | 90 | 9,4 | 040 | - | - |
| IM | + | 85 | 5,5 | 035 | + | + |

| laminar | Mindestanforderung >5kPa | Rohdichte [kg/m³] | GV [%] | WLG | Schmelzpunkt >1000°C | Alkaliresistenz |
|---|---|---|---|---|---|---|
| Steinwolle | + | 120 | 3,7 | 035 | + | + |
| Glaswolle | + | 100 | 7 | 035 | - | - |
| IM | + | 85 | 5 | 030 | + | + |

| Lamellenplatte | Mindestanforderung >80kPa | Rohdichte [kg/m³] | GV [%] | WLG | Schmelzpunkt >1000°C | Alkaliresistenz |
|---|---|---|---|---|---|---|
| Steinwolle | + | 75 | 3 | 040 | + | + |
| IM | + | 60 | 5 | 040 | + | + |

Voraussetzung für die Erlangung der Zulassung der Dämmstoffplatten ist die Einhaltung der als Mindestanforderung vorgegebenen Abreißfestigkeit. Diese charakterisiert die Zugbelastung der Dämmstoffplatte in eingebautem Zustand, welche durch Windkräfte an der Dämmstoffplatte angreifen und denen diese widerstehen muss. Es geht also um die Standsicherheit des Systems.

Wie die Werte aus der Tabelle_zeigen, besteht ein wesentlicher Vorteil der erfindungsgemäßen Dämmplatte gegenüber Dämmplatten aus herkömmlicher Glaswolle und herkömmlicher Steinwolle bei gestauchten und laminaren Produkten in der besseren Wärmeleitfähigkeitsgruppe bei geringer Rohdichte gegenüber herkömmlicher Steinwolle und vergleichbarer Rohdichte herkömmlicher Glaswolle. Dämmplatten aus herkömmlicher Glaswolle erfüllen aber nicht das Kriterium eines Schmelzpunkts >1000°C und weisen auch keine Alkaliresistenz auf, was bei den üblicherweise verwendeten Putzen von Nachteil ist und entsprechende zusätzliche Maßnahmen, etwa Additivzugabe, erfordert.

Bei den Vergleichsversuchen betreffend die Lamellenplatte ist anzumerken, dass kein verfügbares Produkt aus Glaswolle handelsüblich beziehbar war, allerdings Lamellenplatten aus Glaswolle theoretisch die Mindestanforderungen an die Abreißfestigkeit erfüllen sollten. Der Vorteil der geringeren Rohdichte im Falle von Glaswolle würde allerdings durch den höheren erforderlichen Bindemittelgehalt (vgl. Glühverlust) relativiert, wobei aber wiederum das geforderte Schmelzpunktkriterium und die Alkaliresistenz nicht erfüllt werden würde. Deswegen wurde im Vergleichversuch der erfindungsgemäßen IM-Lamellenplatte nur eine Lamellenplatte aus herkömmlicher Steinwolle gegenübergestellt.

## Patentansprüche

1. Dämmelement für ein Wärmedämmverbundsystem aus gebundenen Mineralfasern, wobei die Zusammensetzung der Mineralfasern ein Alkali/Erdalkali-Massenverhältnis von < 1 aufweist und die Faserstruktur des Dämmelements bestimmt ist durch einen mittleren geometrischen Faserdurchmesser ≤ 4 µm und eine Rohdichte im Bereich von 40 bis 100 kg/m³, **dadurch gekennzeichnet, dass** die Mineralfasern in einem physiologischen Milieu löslich sind und die Faserstruktur des Dämmelements bestimmt ist durch einen Anteil des Bindemittels bezogen auf die Fasermasse des Dämmelements im Bereich von 4,5 bis 7 Gew.-%.

2. Dämmelement nach Anspruch 1, **dadurch gekennzeichnet, dass** das Bindemittel ein organisches Bindemittel ist.

3. Dämmelement nach Anspruch 1 oder 2, **dadurch gekennzeichnet, dass** der Anteil des Bindemittels bezogen auf die Masse des Dämmelements im Bereich von 4,5 bis 6 Gew.-% liegt.

4. Dämmelement nach einem der vorhergehenden Ansprüche, **dadurch gekennzeichnet, dass** die Rohdichte des Dämmelements in der Form einer Platte (11) im Bereich von 70 bis 90 kg/m³, vorzugsweise etwa 85 kg/m³, oder in der Form einer Lamellenplatte (21) im Bereich von 40 bis 70 kg/m³, vorzugsweise etwa 60 kg/m³, liegt.

5. Dämmelement nach einem der vorhergehenden Ansprüche, **dadurch gekennzeichnet, dass** das Dämmelement gestaucht ist und eine Wärmeleitfähigkeit entsprechend der Wärmeleitfähigkeitsgruppe 035 gemäß DIN 18165 oder dergl. hat.

6. Dämmelement nach einem der Ansprüche 1 bis 4, **dadurch gekennzeichnet, dass** das Dämmelement laminar ist und eine Wärmeleitfähigkeit entsprechend einer Wärmeleitfähigkeitsgruppe 030 gemäß DIN 18165 oder dergl. hat.

7. Dämmelement nach einem der vorhergehenden Ansprüche, **dadurch gekennzeichnet, dass** das Dämmelement in der Form einer laminaren Platte eine Abreißfestigkeit von mindestens 5 kPa, in der Form einer gestauchten Platte (11) eine Abreißfestigkeit von mindestens 14 kPa oder in der Form einer Lamelle (21) eine Abreißfestigkeit von mindestens 80 kPa aufweist.

8. Dämmelement nach einem der vorhergehenden Ansprüche, **dadurch gekennzeichnet, dass** das Dämmelement einen Schmelzpunkt nach DIN 4102, Teil 17 von ≥ 1.000 °C aufweist.

9. Dämmelement nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100 °C hergestellt sind.

10. Dämmelement nach einem der vorhergehenden Ansprüche, **dadurch gekennzeichnet, dass** die Mineralfasern des Dämmelements hinsichtlich ihrer Löslichkeit in einem physiologischen Milieu gemäß den Anforderungen der europäischen Richtlinie 97/69/EG und/oder den Anforderungen der deutschen Gefahrstoffverordnung Abs. IV Nr. 22 entsprechen.

11. Dämmelement nach Anspruch 10, **gekennzeichnet durch** folgende Bereiche der chemischen Zusammensetzung der Mineralfasern in Gew.-%:
| | | | |
|---|---|---|---|
| SiO₂ | 39-55 % | vorzugsweise | 40-52 % |
| Al₂O₃ | 16-27 % | vorzugsweise | 16-26 % |
| CaO | 9,5-20 % | vorzugsweise | 10-18 % |
| MgO | 1-5 % | vorzugsweise | 1-4,9 % |
| Na₂O | 0- 15 % | vorzugsweise | 2-12 % |
| K₂O | 0- 15 % | vorzugsweise | 2-12 % |
| R₂O(Na₂O+K₂O) | 10-14,7 % | vorzugsweise | 10-13,5 % |
| P₂O₅ | 0-3 % | insbesondere | 0-2 % |
| Fe₂O₃ (Eisen gesamt) | 1,5-15 % | insbesondere | 3,2-8 % |
| B₂O₃ | 0-2 % | vorzugsweise | 0 - 1 % |
| TiO₂ | 0-2 % | vorzugsweise | 0,4-1 % |
| Sonstiges | 0-2,0 % | | |

12. Dämmelement nach einem der vorhergehenden Ansprüche, **dadurch gekennzeichnet, dass** der Perlenanteil des Dämmelements < 1 % ist.

13. Wärmedämm-Verbundsystem mit mindestens einem Dämmelement aus gebundenen, in einem physiologischen Milieu löslichen Mineralfasern gemäß einem der Ansprüche 1 bis 12, bei dem das Dämmelement insbesondere mehrfach an einer Gebäudewand (3) zu einer Dämmschicht angebracht ist, welche ggf. mittels Dübeln (2) am Untergrund der Gebäudewand (3) befestigt und mit mindestens einer vorzugsweise armierten Putzschicht (4) abgedeckt ist.

14. Wärmedämm-Verbundsystem in der Form eines selbsttragenden Dämmelements als Sandwich mit zwei beabstandeten Außenschalen, zwischen denen mindestens eine Dämmschicht aus gebundenen, in einem physiologischen Milieu löslichen Mineralfasern gemäß einem der Ansprüche 1 bis 12 angeordnet ist und welches insbesondere eine Temperaturbeständigkeit zur Einhaltung der Anforderungen der normativen Feuerwiderstandklassen oder dergl. aufweist, **dadurch gekennzeichnet, dass** die Rohdichte im Bereich von 50 bis 80 kg/m³ bei den Feuerwiderstandsklassen F 30, F 45 und F 60 und die Rohdichte im Bereich von 80 bis 120 kg/m³ bei den Feuerwiderstandsklassen F 90 und F 120 liegt.

15. Wärmedämm-Verbundsystem nach Anspruch 14, **dadurch gekennzeichnet, dass** die Dämmschicht durch mindestens eine Lamelle (21) gebildet ist, wogegen die Außenschalen vorzugsweise aus Metall bestehen und mit den Großflächen der Dämmschicht verklebt sind.

16. Wärmedämm-Verbundsystem nach Anspruch 14 oder 15, **dadurch gekennzeichnet, dass** die Druckspannung der Dämmschicht bei 10 % Stauchung nach DIN EN 826 ≥ 80 kPa und die Abreißfestigkeit DIN EN 1607 ≥ 100 kPa beträgt.

## Claims

1. Insulating element for a thermo-insulating compound system of bound mineral fibers, whereby the composition of the mineral fibers features an alkali/earth alkali mass ratio of < 1 and the fiber structure of said insulating element is determined by an average geometric fiber diameter of ≤ 4 µm and a gross density in the range of 40 to 100 kg/m³ **characterized in that** said mineral fibers are soluble in a physiological milieu, and the fibre structure of the insulating element is determined by a portion of the binding agent relative to the fiber mass of the insulating element in the range of 4,5 to 7 weight %.

2. Insulating element according to claim 1, **characterized in that** the binding agent is an organic binding agent.

3. Insulating element according to claim 1 or 2, **characterized in that** the portion of binding agent, relative to the mass of the insulating element, is in the range of 4,5 to 6 weight %.

4. Insulating element according to one of the preceding claims, **characterized in that** the gross density of said insulating element in the form of a plate (11) is in the range of 70 to 90 kg/m³, preferably approximately 85 kg/m³ or in the form of a lamella plate (21) is in the range of 40 to 70 kg/m³, preferably around 60 kg/m³.

5. Insulating element according to one of the preceding claims, **characterized in that** said insulating element is buckled respectively upset, featuring a thermal conductivity rate corresponding to thermal conductivity group 035, as per DIN 18165 or similar.

6. Insulating element according to claims 1 to 4, **characterized in that** the insulating element is of laminar format, featuring a thermal conductivity rate corresponding to a thermal conductivity group 030 according to DIN 18165 or similar.

7. Insulating element according to one of the preceding claims, **characterized in that** said insulating element in the form of a laminar plate, offers a rupture resistance of at least 5 kPa, in the form of an upset plate (11) it features a rupture resistance of at least 14 kPa or in the form of a lamella (21), a rupture resistance of at least 80 kPa.

8. Insulating element according to one of the preceding claims, **characterized in that** said insulating element features a fusion point according to DIN 4102, Part 17, of ≥ 1.000 °C.

9. Insulating element according to one of the preceding claims, **characterized in that** the mineral fibers of said insulating elements are produced by internal centrifugation according to the centrifuging basket process, with a basket temperature of at least 1.100°C.

10. Insulating element according to one of the preceding claims, **characterized in that** the mineral fibers of said insulating element, in reference to their solubility in a physiological milieu, correspond to the requirements of the European Guideline 97/69/EG and/or to the requirements of the German Norm for Dangerous Products, Section IV, Nr. 22.

11. Insulating element according to claim 10, **characterized by** the following ranges of chemical composition of mineral fibers in weight %:
| | | | |
|---|---|---|---|
| SiO₂ | 39-55 % | preferably | 40-52 % |
| Al₂O₃ | 16-27 % | preferably | 16-26 % |
| CaO | 9,5-20 % | preferably | 10-18 % |
| MgO | 1 - 5 % | preferably | 1-4,9 % |
| Na₂O | 0- 15 % | preferably | 2-12 % |
| K₂O | 0-15 % | preferably | 2-12 % |
| R₂O (Na₂O + K₂O) | 10-14,7 % | preferably | 10-13,5 % |
| P₂O₅ | 0-3 % | especially | 0-2 % |
| Fe₂O₃ (iron total) | 1,5-15 % | especially | 3,2-8 % |
| B₂O₃ | 0-2 % | preferably | 0 - 1 % |
| TiO₂ | 0-2 % | preferably | 0,4-1 % |
| Other | 0-2,0 % | | |

12. Insulating element according to one of the preceding claims, **characterized in that** the amount of beads of the insulating element is < 1 %.

13. Thermo-insulating compound system with at least one insulating element made of bound mineral fibres that are soluble in a physiological medium according to one of the claims 1 to 12, where said insulating element is especially applied repeatedly at a building wall (3) in the form of an insulating layer, which is eventually attached with dowels (2) at the basis of said building wall (3) and being covered with at least a preferably reinforced plaster layer (4).

14. Thermo-insulating compound system in the form of a self-sustained insulating element in sandwich form, with two distanced outer shells, between which at least one insulating layer is provided with bound mineral fibers, soluble in a physiological milieu according to one of the claims 1 to 12 and which features especially a temperature resistance to preserve the requirements of the normative fire resistance categories or similar disposition, **characterized in that** the gross density is in the range of 50 to 80 kg/m³ at fire resistance categories F 30, F 45 and F 60 and the gross density is in the range of 80 to 120 kg/m³ at fire resistance categories F 90 and F 120.

15. Thermo-insulating compound system according to claim 14, **characterized in that** said insulating layer is formed from at least one lamella (21), whilst the outer shells preferably consist of metal, being glued with the large surfaces of the insulating layer.

16. Thermo-insulating compound system according to claim 14 and 15, **characterized in that** the pressure tension of said insulating layer at 10% buckling respectively compression according to DIN EN 826 is of ≥ 80 kPa and the rupture resistance according to DIN EN 1607 is of ≥ 100 kPa.

## Revendications

1. Élément isolant pour système composite calorifuge en fibres minérales liées, la composition des fibres minérales ayant un rapport en masse alcali/alcalinoterreux < 1 et la structure fibreuse de l'élément isolant étant déterminée par un diamètre géométrique de fibre moyen ≤ 4 µm et une masse volumique apparente de l'ordre de 40 à 100 kg/m³, **caractérisé en ce que** les fibres minérales sont solubles dans un milieu physiologique et la structure fibreuse de l'élément isolant est déterminée par un pourcentage de liant rapporté à la masse de fibre de l'élément isolant de l'ordre de 4,5 à 7% en poids.

2. Élément isolant selon la revendication 1, **caractérisé en ce que** le liant est un liant organique.

3. Élément isolant selon la revendication 1 ou 2, **caractérisé en ce que** le pourcentage de liant rapporté à la masse de l'élément isolant est de l'ordre de 4,5 à 6% en poids.

4. Élément isolant selon l'une des revendications précédentes, **caractérisé en ce que** la masse volumique de l'élément isolant est de l'ordre de 70 à 90 kg/m³, avantageusement environ 85 kg/m³, lorsqu'il est sous la forme d'un panneau (11) ou de l'ordre de 40 à 70 kg/m³, avantageusement environ 60 kg/m³, lorsqu'il est sous la forme d'un panneau stratifié (21).

5. Élément isolant selon l'une des revendications précédentes, **caractérisé en ce que** l'élément isolant est comprimé et a une conductibilité thermique correspondant au groupe de conductibilité thermique 035 selon DIN 18165 ou analogue.

6. Élément isolant selon l'une des revendications 1 à 4, **caractérisé en ce que** l'élément isolant est stratifié et a une conductibilité thermique correspondant au groupe de conductibilité thermique 030 selon DIN 18165 ou analogue.

7. Élément isolant selon l'une des revendications précédentes, **caractérisé en ce que** l'élément isolant a une résistance à l'arrachement de moins de 5 kPa lorsqu'il se présente sous la forme d'un panneau stratifié, une résistance à l'arrachement d'au moins 14 kPa lorsqu'il se présente sous la forme d'un panneau comprimé (11) et une résistance à l'arrachement d'au moins 80 kPa lorsqu'il se présente sous la forme d'une lamelle (21).

8. Élément isolant selon l'une des revendications précédentes, **caractérisé en ce que** l'élément isolant a un point de fusion selon DIN 4102, partie 17 ≥ 1000°C.

9. Élément isolant selon l'une des revendications précédentes, **caractérisé en ce que** les fibres minérales de l'élément isolant sont fabriquées par une centrifugation intérieure dans le procédé à panier centrifuge à une température au niveau du panier centrifuge d'au moins 1100°C.

10. Élément isolant selon l'une des revendications précédentes, **caractérisé en ce que** les fibres minérales de l'élément isolant correspondent en ce qui concerne leur solubilité dans un milieu physiologique aux exigences de la directive européenne 97/69/EG et/ou aux exigences du décret allemand sur les substances nocives (Gefahrstoffverordnung) paragraphe IV n° 22.

11. Élément isolant selon la revendication 10, **caractérisé par** les domaines suivants de la composition chimique des fibres minérales en pourcentage en poids :
| | | | |
|---|---|---|---|
| SiO₂ | 39 - 55% | Avantageusement | 40 - 52% |
| Al₂O₃ | 16 - 27% | Avantageusement | 16 - 26% |
| CaO | 9,5 - 20% | Avantageusement | 10 - 18% |
| MgO | 1 - 5 | Avantageusement | 1 - 4,9% |
| Na₂O | 0 - 15% | Avantageusement | 2 - 12% |
| K₂O | 0 - 15% | Avantageusement | 2 - 12% |
| R₂O (Na₂O+K₂O) | 10 - 14,7 | Avantageusement | 10 - 13,5% |
| P₂O₅ | 0 - 3% | Notamment | 0 - 2% |
| Fe₂O₃ (fer en totalité) | 1,5 - 15% | Notamment | 3,2 - 8% |
| B₂O₃ | 0 - 2% | Avantageusement | 0 - 1% |
| TiO₂ | 0 - 2% | Avantageusement | 0,4 - 1% |
| Autres | 0 - 2,0% | | |

12. Élément isolant selon l'une des revendications précédentes, **caractérisé en ce que** le pourcentage de perles de l'élément isolant est < 1%.

13. Système composite calorifuge comportant au moins un élément isolant en fibres minérales liées solubles dans un milieu physiologique selon l'une des revendications 1 à 12, dans lequel l'élément isolant est appliqué notamment plusieurs fois contre une paroi de bâtiment (3) pour former une couche isolante qui est fixée le cas échéant au moyen de chevilles (2) à la base de la paroi de bâtiment (3) et qui est recouverte d'au moins une couche d'enduit (4) avantageusement armée.

14. Système composite calorifuge se présentant sous la forme d'un élément isolant autoporteur pris en sandwich entre deux coques extérieures à distance l'une de l'autre, entre lesquelles est disposée au moins une couche isolante en fibres minérales liées solubles dans un milieu physiologique selon l'une des revendications 1 à 12 qui présente notamment une résistance thermique respectant les exigences des classes normalisées de résistance au feu ou analogues, **caractérisé en ce que** la masse volumique apparente est de l'ordre de 50 à 80 kg/m³ pour les classes de résistance au feu F30, F45 et F60 et la masse volumique apparente est de l'ordre de 80 à 120 kg/m³ pour les classes de résistance au feu F90 et F120.

15. Système composite calorifuge selon la revendication 14, **caractérisé en ce que** la couche isolante est formée par au moins une lamelle (21) tandis que les coques extérieures sont avantageusement en métal et sont collées aux grandes surfaces de la couche isolante.

16. Système composite calorifuge selon la revendication 14 ou 15, **caractérisé en ce que** la contrainte de compression de la couche isolante pour une compression de 10% selon DIN EN 826 est ≥ 80 kPa et la résistance à l'arrachement selon DIN EN 1607 est ≥ 100.
